# EUROPEAN PATENT APPLICATION

(11) **EP 4 807 321 A1**
(43) Date of publication of application: **16.09.2026**
(21) Application number: 26158737.2
(22) Date of filing: 16.02.2026
(51) Int. Cl.: G01C 21/16, B64D 45/08, G08G 5/54

(54) **NAVIGATION SYSTEM FOR UNCREWED AIRCRAFT SYSTEMS AT VERTIPORTS**

(30) Priority: 12.03.2025 US 202519077574
(71) Applicant: Honeywell International Inc., Charlotte, NC 28202 (US)
(72) Inventor: BAGESHWAR, Vibhor L., Charlotte, 28202 (US)
(74) Representative: Haseltine Lake Kempner LLP

(57) **Abstract**

A system comprises a vision sensor on a vehicle; an onboard IMU that produces inertial measurements; an onboard strapdown INS that receives the inertial measurements; an onboard first processor coupled to the vision sensor; and an onboard second processor coupled to the strapdown INS and the first processor. The first processor hosts a first set of program modules that extract landing marker information and comprise computer vision and machine learning modules that operate in parallel to perform a method that comprises, receiving image data from the vision sensor, the image data corresponding a marker in a landing zone; extracting corner points for the marker; resolving the corner points in a landing zone frame; computing vehicle position statistics with respect to the corner points; and associating the marker with a marker ID in a marker library. The second processor hosts a second set of program modules providing filter and association functions.

## Description

### BACKGROUND

Uncrewed aircraft systems (UAS) applications in the National Airspace include delivery, sampling, surveillance, and passenger transport. UAS flights can be broken into various segments or phases including take-off, ascent to cruise, cruise, descent to landing, and landing. The cruise segment can include mission segments where the UAS loiters or performs other tasks. UAS landing sites include allocated landing zones such as vertiports on the ground, or on top of buildings, or on moving vehicles such as trucks or ships.

UAS navigation systems must satisfy stringent requirements to enable autonomous landing at sites such as vertiports to support these applications. These navigation systems must operate in both Global Navigation Satellite System (GNSS) available and GNSS denied environments including jammed or spoofed conditions. Further, certain UAS operators have requirements that vertiports are unpowered or minimally powered, so surface infrastructure to support navigation systems cannot include powered features or GNSS base stations.

As a result, there is a need for UAS navigation systems that have sensors, alternative to GNSS sensors, which aid the navigation system in a landing zone while relying on unpowered features.

### SUMMARY

A system comprises at least one vision sensor mounted on a vehicle; an inertial measurement unit (IMU) operative to produce inertial measurements for the vehicle; a strapdown inertial navigation system (INS) on the vehicle and configured to receive the inertial measurements from the IMU; at least one first processor on the vehicle and operatively coupled to the at least one vision sensor; and at least one second processor on the vehicle and operatively coupled to the strapdown INS and the at least one first processor. The at least one first processor hosts a first set of program modules operative to extract landing marker information, the first set of program modules comprising a computer vision module and a machine learning module that are configured to operate in parallel such that each performs a method comprising: receiving image data from the at least one vision sensor, the image data corresponding to at least one marker in a landing zone for the vehicle; extracting corner points for the at least one marker; resolving the corner points in a landing zone frame; computing position statistics for the vehicle with respect to the corner points; and associating the at least one marker with at least one marker identification (ID) in a marker library for the landing zone. The at least one second processor hosts a second set of program modules operative to provide filter and association functions, the second set of program modules comprising a navigation filter, an association checks module, and a tentative markers module. The strapdown INS is operative to generate estimated kinematic state statistics for the vehicle relative to the landing zone frame, based on output data from the IMU, and output data from the filter and association functions of the at least one second processor.

### BRIEF DESCRIPTION OF THE DRAWINGS

Features of the present invention will become apparent to those skilled in the art from the following description with reference to the drawings. Understanding that the drawings depict only typical embodiments and are not therefore to be considered limiting in scope, the invention will be described with additional specificity and detail through the use of the accompanying drawings, in which:
Figure 1 is a block diagram of a system for providing landing zone navigation of a vehicle, according to one embodiment;
Figure 2 is a block diagram of a system for providing filter and association functions that can be performed in the system of Figure 1, according to an example embodiment;
Figure 3 is a functional block diagram of a method for providing filter and association functions, according to an example implementation;
Figure 4 is a functional block diagram of a method for providing association checks, according to an example implementation.
Figure 5 is a functional block diagram of a method for providing association checks for tentative marker positions, according to an example implementation; and
Figure 6 is a vector diagram showing a schematic representation of landing zone kinematics, according to one example.

### DETAILED DESCRIPTION

In the following detailed description, embodiments are described in sufficient detail to enable those skilled in the art to practice the invention. It is to be understood that other embodiments may be utilized without departing from the scope of the invention. The following detailed description is, therefore, not to be taken in a limiting sense.

A navigation system and method for UAS operations at vertiports are described herein.

Navigation systems for vehicles using vertiports typically operate using unpowered surface markers painted on landing zone surfaces such as landing pads. Each vertiport typically has a marker library for all landing pads and their markers and corresponding IDs. A UAS vehicle typically includes a sensor set having an inertial measurement unit (IMU), a camera, and other aiding sensors such as a GNSS receiver, an altimeter, or the like.

At vertiports that handle UAS operations, both crewed and uncrewed operations can occur. In addition, GNSS denied operations can occur at vertiports. Thus, as mentioned above, there are stringent requirements for UAS navigation operations at vertiports. The present navigation system and method utilize a tightly coupled approach to meet the stringent navigation requirements for UAS vehicles.

The present approach provides a high-integrity navigation system that uses camera, or other vision sensor, measurements of surface markers extracted using computer vision and machine learning techniques, to satisfy the stringent landing zone navigation requirements for UAS vertiport operations. In the present approach, an onboard camera or other vision sensor on a UAS vehicle is used in combination with markers, such as Aruco codes, fiducials, structured patterns, or the like, which are applied on surface landing zones, to aid a navigation system of the vehicle during landing zone operation. The markers are unpowered and can be painted or projected within a final approach and takeoff (FATO) area of a vertiport. These markers provide the onboard camera, or other vision sensor, with known surface features to compute measurements for the navigation system. These measurements can be extracted from the camera, or other vision sensor, using both the computer vision and machine learning techniques. The markers are then compared to a marker library for the vertiport to estimate the vehicle kinematic statistics relative to a landing zone.

For example, the present system can employ a combination of computer vision and machine learning algorithms to estimate position vectors to marker corners and to identify marker IDs from camera (or other vision sensor) measurements. In addition, the present system includes a combination of filter and association algorithms. The association algorithms use both the marker corners and the marker IDs to associate marker measurements with currently tracked markers. In the tightly coupled approach, the system can use extracted shapes with three corners as measurements (without IDs).

In one embodiment, the present system includes association algorithms that enable it to perform the following functions: track currently observed markers and fuse measurements from the different techniques; associate the marker IDs; initialize markers and their IDs that come into view of the onboard camera or other vision sensors; delete markers that are no longer in view of the onboard camera or other vision sensors; and reject false marker measurements that are provided by one or more of the techniques used to extract observations of the surface markers.

In one implementation of the present UAS navigation method, the following measurements and information are obtained: camera or other vision sensor measurements of surface markers; surface markers available in a vertiport's marker library; and positions and IDs of surface markers relative to a landing zone frame. The surface markers are extracted from camera or other vision sensor measurements using two methods operating in parallel, including the computer vision technique and the machine learning technique. The outputs include a camera or other vision sensor position relative to marker corners resolved in the landing zone frame, and marker IDs associated with the marker corners.

Table 1 below summarizes the steps for a tightly coupled implementation of the present UAS navigation method.

**Table 1**

| **Step** | **Tightly Coupled Implementation** | |
|---|---|---|
| | **Computer Vision** | **Machine Learning** |
| Measurement Statistics | 1. Vehicle position statistics relative to marker; 4-corner positions resolved in the landing zone frame; marker IDs. | |
| | 2. Vehicle position statistics relative to marker; 3-corner positions resolved in the landing zone frame. | |
| Strapdown INS | Vehicle position, velocity, and angular orientation statistics relative to the landing zone frame. | |
| State Vector | 1. Augmented with corner positions. | |
| | 2. Augmented with marker IDs. | |
| Predicted Statistics | 1. Vehicle position, velocity, and angular orientation error statistics. | |
| | 2. IMU bias statistics. | |
| | 3. Corner position error statistics. | |
| | 4. Marker IDs. | |
| TLOF Check | Confirm 3-corner and 4-corner position statistics are within TLOF. | |
| Association Check (AC) | 1. Chi squared test: corner positions. | 1. Chi squared test: corner positions. |
| | 2. Marker ID check. | 2. Marker ID check. |
| Initialization (Fail AC) | Initialize new position statistics. | Initialize new position statistics. |
| Updated Statistics (Pass AC) | 1. Update state error vector statistics. | 1. Update state error vector statistics. |
| | 2. Update corner statistics. | 2. Update corner statistics. |
| | 3. Maintain markers. | 3. Maintain markers. |
| Deletion Check | Compare position and marker position statistics to a user selected threshold: | Compare position and marker position statistics to a user selected threshold: |
| | 1. If less than or equal to user selected threshold, then maintain marker position statistics and associated marker ID. | 1. If less than or equal to user selected threshold, then maintain marker position statistics and associated marker ID. |
| | 2. If greater than user selected threshold, then delete marker position statistics and associated marker ID. | 2. If greater than user selected threshold, then delete marker position statistics and associated marker ID. |

The tightly coupled implementation of the present UAS navigation method is described in further detail below. In addition, further details of various embodiments are described hereafter and with reference to the drawings.

The landing zone kinematics described herein are defined using the following parameters:
*F_{b}* ≡ body frame;
*F_{c}* ≡ camera frame;
*F_{LZ}* ≡ landing zone frame; local horizontal, local vertical frame;
*̅p̅*̅ = vehicle position vector;
*̅p̅*̅_{*c*/*b*} ≡ (known) camera position vector relative to *F_{b}*;
*r̅_{j,i}* ≡ position vector of corner *i* of marker *j* from *F_{c}*
*r̅_{b,j,i}* ≡ position vector of corner *i* of marker *j* from *F_{b}*;
*ρ̅_{j,i}* ≡ (known from marker library) position vector of corner *i* of marker *j* from *F_{LZ};* $\vec{p} + {\vec{ρ}}_{j , i} = {\vec{p}}_{c / b} + {\vec{r}}_{j , i} = {\vec{r}}_{bj , i} ∀ i = 1 , … , I ; I = 4 ;$
*C_{bc}* ≡ (known) DCM, camera frame to body frame;
*C_{LZb}* = DCM, body frame to landing zone frame;
DCM ≡ direction cosine matrix;
*J* ≡ (known) total number of markers.

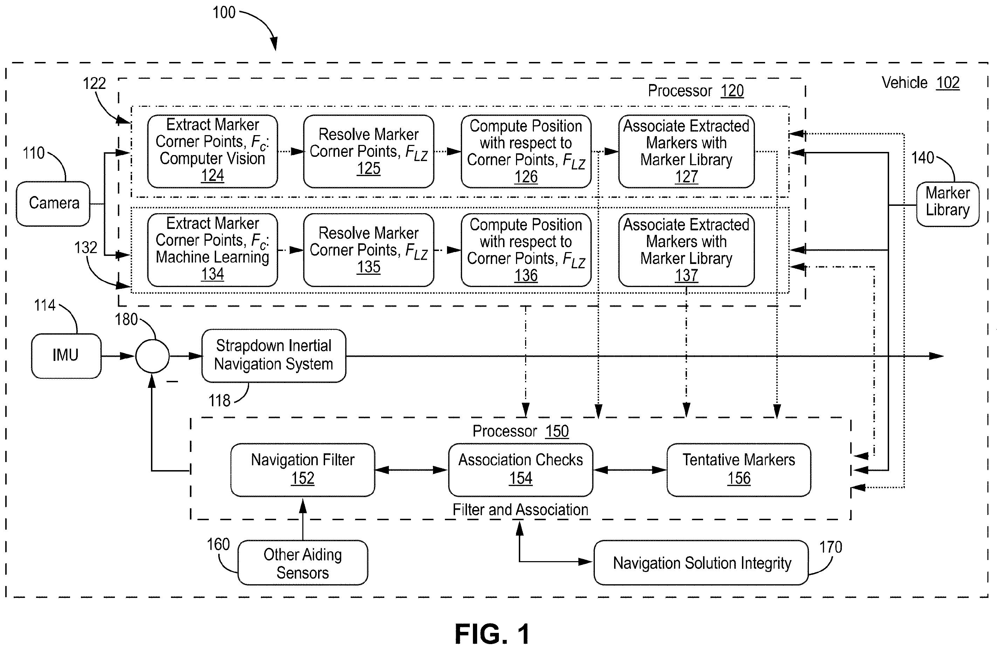

Figure 1 is a block diagram of a system 100 for providing landing zone navigation of a vehicle 102, according to one embodiment. The system 100 generally comprises at least one camera 110 or other vision sensor mounted on vehicle 102; an onboard inertial measurement unit (IMU) 114 operative to produce inertial measurements for vehicle 102; and a strapdown inertial navigation system (INS) 118 onboard vehicle 102 and configured to receive the inertial measurements from IMU 114. At least one first processor 120 onboard vehicle 102 is operatively coupled to camera 110 or other vision sensor; and at least one second processor 150 onboard vehicle 102 is operatively coupled to strapdown INS 118 and first processor 120.

The first processor 120 hosts a first set of program modules operative for extracting surface marker information. The first set of program modules comprises a computer vision module 122 and a machine learning module 132 that are configured to operate in parallel such that each performs a method for extracting marker information from images of markers in a landing zone, with the images captured by camera 110 or other vision sensor. The method for extracting marker information is described in further detail hereafter. A marker library 140 for the landing zone is communicatively coupled to computer vision module 122 and machine learning module 132.

The second processor 150 hosts a second set of program modules operative to provide filter and association functions. The second set of program modules comprises a navigation filter 152, an association checks module 154 in operative communication with navigation filter 152, and a tentative markers module 156 in operative communication with association checks module 154. In addition, other aiding sensors 160, such as a GNSS receiver, an altimeter, a magnetometer, a barometer, or the like, can be communicatively coupled with navigation filter 152. A navigation solution integrity module 170 can be in operative communication with second processor 150.

During operation, computer vision module 122 receives image data from camera 110, with the image data corresponding to a marker in a landing zone for vehicle 102, and performs a method for extracting marker information. The method is operative to extract marker corner points in a camera frame, *F_{c}* (block 124); resolve marker corner points in a landing zone frame, *F_{LZ}* (block 125); compute position statistics for vehicle 102 with respect to the corner points in a landing zone frame, *F_{LZ}* (block 126); and associate extracted markers with marker IDs in marker library 140 (block 127).

Simultaneously, machine learning module 132 also receives the image data from camera 110, and performs a method for extracting marker information. This method is also operative to extract marker corner points in the camera frame, *F_{c}* (block 134); resolve marker corner points in the landing zone frame, *F_{LZ}* (block 135); compute position statistics for vehicle 102 with respect to the corner points in the landing zone frame frame, *F_{LZ}* (block 136); and associate the extracted markers with marker IDs in marker library 140 (block 137).

As described in further detail hereafter, association checks module 154 receives the marker corner position statistics and position statistics for vehicle 102 computed by computer vision module 122, and also receives the marker corner position statistics and position statistics for vehicle 102 computed by machine learning module 132. The association checks module 154 then performs a first position statistics check for the marker corner position statistics and vehicle position statistics computed by computer vision module 122 based on predicted measurement vector statistics from navigation filter 152; and performs a second marker corner position statistics and vehicle position statistics check for the position statistics computed by machine learning module 132 based on the predicted measurement vector statistics from navigation filter 152. The association checks module 154 also performs a first identification (ID) check for a marker associated with a marker ID in marker library 140 based on the marker corner position statistic and vehicle position statistics computed by computer vision module 122 and a predicted ID; and performs a second ID check for the marker associated with the marker ID in the marker library based on the marker corner position statistics and vehicle position statistics computed by machine learning module 132 and the predicted ID.

The association checks module 154, after completing checks, directs the measurement statistics (and IDs, if available) to navigation filter 152 or tentative markers module 156. Moreover, association checks module 154 sends information back to computer vision module 122 or machine learning module 132 if the association is not performed correctly. The strapdown INS 118 generates estimated kinematic state statistics for vehicle 102 relative to the landing zone frame, based on the inertial measurements from IMU 114, which is combined with output data from navigation filter 152 using a subtractor 180.

The navigation solution integrity module 170 is operative to assure that the navigation solution satisfies requirements and is useable by downstream systems of vehicle 102 in the landing zone. The navigation solution integrity module 170 provides a marker integrity check, which detects and excludes markers with three or four corners that lead to an inconsistent navigation solution, using solution separation techniques. Further details related to marker integrity checks to assure navigation solutions for use in landing of vehicles at vertiports, is described in a co-pending application entitled INTEGRITY OF NAVIGATION SYSTEM FOR UNCREWED AIRCRAFT SYSTEMS DURING VERTIPORT OPERATIONS, Attorney Docket No. H239767, the disclosure of which is incorporated by reference herein.

In addition, a deletion check can be performed in each of computer vision module 122 and machine learning module 132, by comparing position and marker position statistics to a user selected threshold. If the position and marker position statistics are less than or equal to the user selected threshold, then the marker position statistics and an associated marker ID are maintained. If the position and marker position statistics are greater than the user selected threshold, then the marker position statistics and the associated marker ID are deleted.

The present system and method are described in additional detail in the following sections.

### Strapdown INS Equations

The mechanization equations utilized by the strapdown INS in the present navigation system are listed below. These equations govern vehicle motion forward in time. ${\dot{p}}^{LZ} = {v}^{LZ}$ ${\dot{v}}^{LZ} = {C}_{LZb} {f}^{b} - \left[\left(2{ω}_{E / I}^{LZ}+{ω}_{LZ / E}^{LZ}\right)\times \right] {v}^{LZ} + {g}^{LZ}$ ${\dot{C}}_{LZb} = {C}_{LZb} \left[\left({ω}_{b / I}^{b}\right)\times -\left({ω}_{LZ / I}^{b}\right)\times \right]$ where:
*p^{LZ}* ≡ position vector resolved in *F_{LZ}*
*v^{LZ}* ≡ velocity vector resolved in *F_{LZ}*
*g^{LZ}* ≡ gravity vector resolved in *F_{LZ}*
*C_{AB}* ≡ direction cosine matrix, *F_{B}* to *F_{A}* ${ω}_{A / B}^{C} ≡ angular velocity$ of *F_{A}* relative *F_{B}* resolved in *F_{C}*
(∘) ×≡ skew - symmetric matrix
*̅ω̅*̅_{*LZ*/*E*} = 0̅ (for a fixed landing zone)
*̅ω̅*̅_{*LZ*/*I*} = *ω̅LZ*/*E + ω̅E*/*I* = *̅ω̅*̅_{*E*/}*_{I}.*

### 3D Angular Orientation Update Equations

The equations utilized to govern 3D vehicle angular orientation forward in time are listed as follows. ${\left[\begin{matrix}ϕ \\ θ \\ ψ\end{matrix}\right]}_{k + 1} = {\left[\begin{matrix}ϕ \\ θ \\ ψ\end{matrix}\right]}_{k} + T F \left({Ψ}_{b / LZ}\left({t}_{k}\right)\right) {ω}_{b / LZ}^{b} \left({t}_{k}\right)$ where: ${Ψ}_{b / LZ} = \left[\begin{matrix}ϕ \\ θ \\ ψ\end{matrix}\right] ≡ \left[\begin{matrix}roll angle \\ pitch angle \\ heading angle\end{matrix}\right]$ ${\dot{Ψ}}_{b / LZ} = F \left({Ψ}_{b / LZ}\right) {ω}_{b / LZ}^{b} F \left({Ψ}_{b / LZ}\right) = \frac{1}{cos θ} \left[\begin{matrix}1 & sin ϕ sin θ & cos ϕ cos θ \\ 0 & cos ϕ cos θ & - sin ϕ cos θ \\ 0 & sin ϕ & cos ϕ\end{matrix}\right]$ ${ω}_{b / LZ}^{b} = {ω}_{b / i}^{b} - {ω}_{LZ / i}^{b} = {ω}_{b / i}^{b} - \left({ω}_{LZ / E}^{b}+{ω}_{E / i}^{b}\right) = {ω}_{b / i}^{b} - {ω}_{E / i}^{b}$ where:
${ω}_{b / i}^{b} ≡ rate gyro measurements$ resolved in *F_{b}*
${ω}_{LZ / E}^{b} ≡ transport rate$ resolved in *F_{b}* = 0 (for stationary landing pads) $T = {t}_{k + 1} - {t}_{k} .$

### Marker Corner Position Update Equations

The equations utilized to govern marker corner position motion forward in time include: ${ρ}_{j , i}^{LZ} = {ω}_{j , i} ∀ j = 1 , … , J ; i = 1 , … , I ; I = 4$ $E \left[{w}_{j , i}\right] = 0 ∀ j = 1 , … , J ; i = 1 , … , I ; I = 4$ $E \left[{w}_{j , i}\left(t\right){w}_{j , i}\left(τ\right)\right] = {q}_{j , i} δ \left(t-τ\right) ∀ j = 1 , … , J ; i = 1 , … , I ; I = 4 .$

### Strapdown INS Error Models

The equations utilized in strapdown INS error models for the present navigation system are listed as follows. $δ {\dot{p}}^{LZ} = {δv}^{LZ}$ $\begin{matrix}δ {\dot{v}}^{LZ} = \left[\left({C}_{LZb}{f}^{b}\right)\times \right] {δΨ}_{b / LZ}^{LZ} + {C}_{LZb} {δf}^{b} - \left[\left(2{ω}_{E / I}^{LZ}\right)\times \right] {δv}^{LZ} - \left[\left(2{δω}_{E / I}^{LZ}\right)\times \right] {v}^{LZ} \\ + {δg}^{LZ}\end{matrix}$ $\begin{matrix}δ {\dot{Ψ}}_{b / LZ} = - \left[{ω}_{LZ / I}^{LZ}\times \right] {δΨ}_{b / LZ} + {δω}_{LZ / I}^{LZ} - {C}_{LZb} {δω}_{b / I}^{b} \\ = - \left[{ω}_{E / I}^{LZ}\times \right] {δΨ}_{b / LZ} + {δω}_{E / I}^{LZ} - {C}_{LZb} {δω}_{b / I}^{b}\end{matrix}$ ${δρ}_{j , i}^{LZ} = {δw}_{j , i} ∀ j = 1 , … , J ; i = 1 , … , I ; I = 4 .$

### IMU Measurement Models

The equations utilized as IMU measurement models for the present navigation system are listed as follows. ${f}^{b} = \left(I+{M}_{a}\right) {f}_{t}^{b} + {b}_{a}^{b} + {w}_{a}^{b}$ ${ω}_{b / I}^{b} = \left(I+{M}_{g}\right) {ω}_{b / It}^{b} + {b}_{g}^{b} + {w}_{g}^{b}$ ${b}_{\left(⋅\right)}^{b} = {b}_{\left(⋅\right) 0}^{b} + {b}_{\left(⋅\right) s}^{b} {δf}^{b} = {δb}_{a}^{b} + {w}_{a}^{b}$ ${\dot{b}}_{\left(⋅\right) s}^{b} = - \frac{1}{{τ}_{\left(⋅\right)}} {I}_{3 \times 3} {b}_{\left(⋅\right) s}^{b} + {w}_{\left(⋅\right) s}^{b} {δω}_{b / I}^{b} = {δb}_{g}^{b} + {w}_{g}^{b}$ where:
(·)*ₐ*, (·)*_{g}* = accelerometer, gyro
(*·*)*ₜ* ≡ true specific force vector or angular velocity vector
*M* ≡ scale factor and non - orthogonality matrix
*b* ≡ bias vector
*b₀* ≡ bias vector, deterministic component
*bₛ* ≡ bias vector, stochastic component
*w* ≡ white noise vector
*τ* ≡ correlation time.

### State Space Vectors

The equations utilized to define state space vectors in the present navigation system are listed as follows. For state vectors: $X = \left[\begin{matrix}{p}^{LZ} \\ {v}^{LZ} \\ {Ψ}_{b / LZ} \\ {b}_{g}^{b} \\ {b}_{a}^{b} \\ {ρ}_{j , i}^{LZ}\end{matrix}\right] ∀ j = 1 , … , J ; i = 1 , … , I$ $ID = \left[{ID}_{j}\right] ∀ j = 1 , … , J$ where:
*J* ≡ number of markers
*I* = 4 ≡ number of marker corners.
For state error vectors: $δX = \left[\begin{matrix}{δp}_{v}^{LZ} \\ {δv}_{v}^{LZ} \\ {δΨ}_{b / LZ} \\ {δb}_{g} \\ {δb}_{a} \\ {δρ}_{j , i}^{LZ}\end{matrix}\right] ∀ j = 1 , … , J ; i = 1 , … , I .$

### Filter and Association

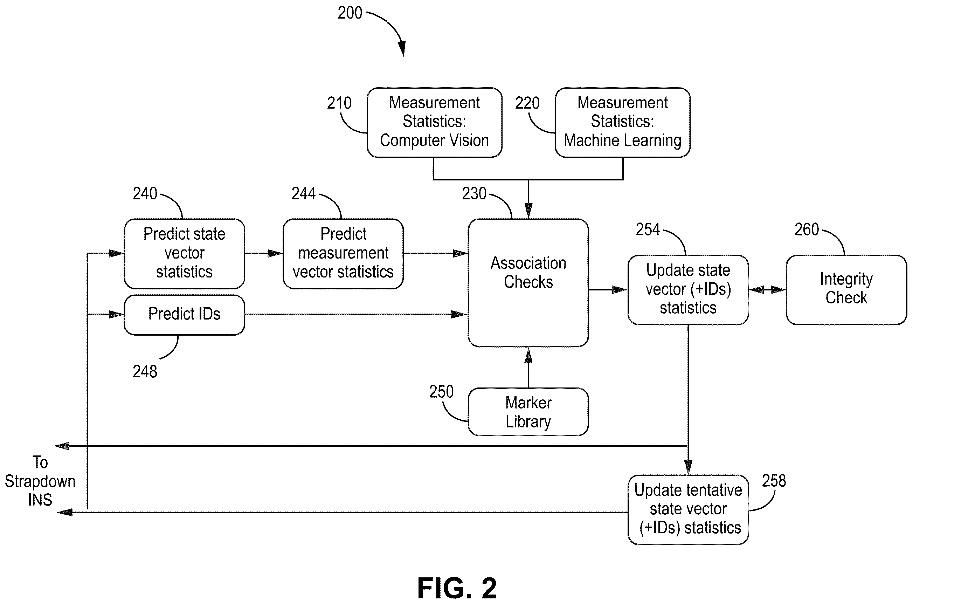

Figure 2 is a block diagram of a system 200 for providing filter and association functions that can be performed in the present navigation system, according to an example embodiment. As shown, measurement statistics are computed by a computer vision algorithm (block 210), and measurement statistics are also computed by a machine learning algorithm (block 220). The respective measurement statistics are then sent to an association checks module 230. A navigation filter (not shown) is used to predict state vector statistics (block 240), which in turn is used to predict measurement vector statistics (block 244), which are sent to association checks module 230. A predict IDs function (block 248) sends predicted IDs from the navigation filter to association checks module 230.

The association checks module 230 performs a first measurement statistics check for the measurement statistics from the computer vision algorithm based on the predicted measurement vector statistics; and performs a second measurement statistics check for the measurement statistics from the machine learning algorithm based on the predicted measurement vector statistics. The association checks module 230 also performs a first ID check for a marker associated with a marker ID in a marker library 250 based on the measurement statistics from the computer vision algorithm and a predicted ID; and performs a second ID check for the marker associated with the marker ID in marker library 250 based on the measurement statistics computed by the machine learning algorithm and the predicted ID.

The association checks module 230 operates with an update state vector (+ IDs) statistics module 254 and outputs an update of state vector statistics with marker IDs, which is sent to a strapdown INS for further processing. The association checks module 230 also operates with the update tentative state vector (+IDs) statistics module 258 and outputs an update of the tentative state vector statistics with marker IDs, which is also sent to the strapdown INS for further processing. An integrity check 260 for the update of state vector statistics with marker IDs (from 254) can be performed to detect and exclude markers with three or four corners that lead to an inconsistent navigation solution, using solution separation techniques.

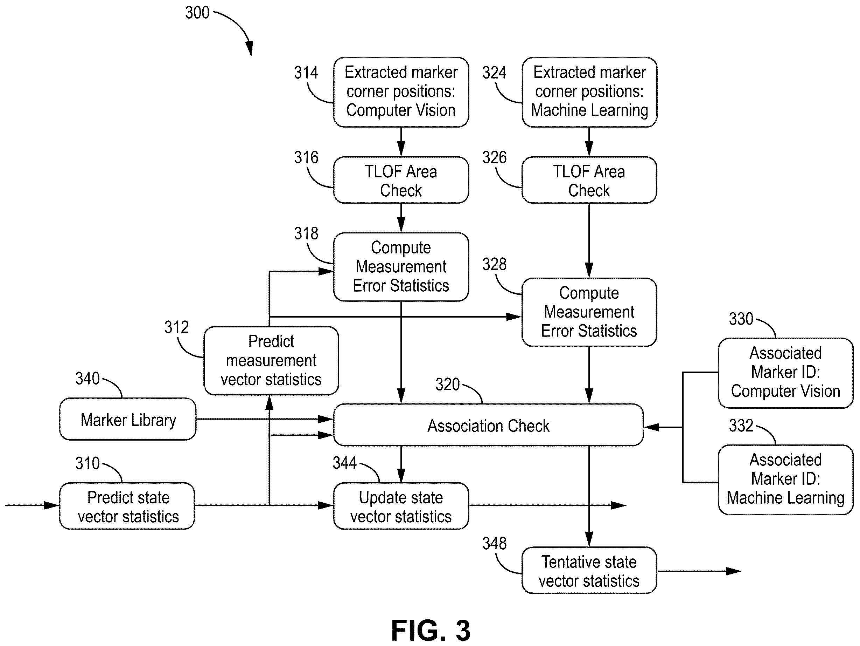

Figure 3 is a functional block diagram of a method 300 for providing filter and association functions, according to an example implementation. An input from a navigation filter, represented by *δX*_{*k*/*k*}, *P*_{*k*/*k*}, *ID*_{*k*/*k*}, is used to predict state vector statistics and marker ID (block 310), represented by *δX*_{*k+*1/*k*}, *P*_{*k+1*/*k*}, *ID*_{*k+*1/*k*}, which is used to predict measurement vector statistics (block 312). Extracted marker corner positions from a computer vision algorithm (block 314), represented by ${ρ}_{m , CV , g , i , k + 1}^{LZ}$, *R*_{*CV,g,i,k+*1}, are sent to a touchdown and lift-off (TLOF) area check (block 316) to confirm that three and four corner position statistics are within the TLOF area. If the three and four corner position statistics are within the TLOF area, represented by ${ρ}_{m , CV , g , i , k + 1}^{LZ} \leq {ρ}_{TLOF}^{LZ}$, then a compute measurement error statistics function (block 318) receives the predicted measurement vector statistics (from block 312), represented by ${ρ}_{j , i , k + 1 / k}^{LZ}$, *P*_{*ρ,j,i,k+*1/}*ₖ,* and receives the extracted marker corner positions from computer vision algorithm (block 314), represented by ${ρ}_{m , CV , g , i , k + 1}^{LZ}$, *R*_{*CV*,*g*,*i*,*k*+1}. The computed measurement error statistics, represented by ${δρ}_{m , CV , \overline{g} , i , k + 1}^{LZ} , {S}_{CV , \overline{g} , i , k + 1}^{LZ}$, from the input statistics are then sent to an association check function 320.

Likewise, extracted marker corner positions from a machine learning algorithm (block 324), represented by ${ρ}_{m , ML , l , i , k + 1}^{LZ}$, *R*_{*ML,l,i,k*+1}, are sent to a TLOF area check (block 326) to confirm that the three and four corner position statistics are within the TLOF area. If the three and four corner position statistics are within the TLOF area, represented by ${ρ}_{m , ML , l , i , k + 1}^{LZ} \leq {ρ}_{TLOF}^{LZ}$, then a compute measurement error statistics function (block 328) receives the predicted measurement vector statistics (from block 312) and receives the extracted marker corner positions from a machine learning algorithm (block 324). The computed measurement error statistics, represented by ${δρ}_{m , ML , \overline{l} , i , k + 1}^{LZ} , {S}_{ML , \overline{l} , i , k + 1}^{LZ}$, from the input statistics are then sent to the association check function 320.

The association check function 320 also receives a predicted marker ID, represented by *ID*_{*k+*1/}*ₖ,* an associated marker ID from the computer vision algorithm (block 330), represented by *ID*_{*CV,k+*1}*,* and an associated marker ID from the machine learning algorithm (block 332), represented by *ID*_{*ML,k+*1}*.* The association check function 320 performs a first ID check for the marker associated with the marker ID from the computer vision algorithm (block 330) using a marker library 340 and performs a second ID check for the marker associated with the marker ID from the machine learning algorithm (block 332) using marker library 340.

An update of state vector statistics (block 344) is then produced based on an output from association check function 320 and the predicted state vector statistics and marker ID (from block 310). The update of the state vector statistics, represented by *δX*_{*k+*1/*k+*1}*, P*_{*k+*1/*k+*1}*, ID*_{*k+*1/*k+*1}, is then sent to a strapdown INS for further processing. An update of tentative state vector statistics (block 348) for tentative markers can be produced based on the output from association check function 320 and the update of the state vector statistics (from block 344). The update of tentative state vector statistics (block 348) can then be sent to the strapdown INS for further processing.

### Prediction Step

The equations utilized in the prediction steps performed by the operational methods of the present navigation system are listed as follows. ${δX}_{k + 1 / k} = {Φ}_{k} {δX}_{k / k}$ ${P}_{k + 1 / k} = {Φ}_{k} {P}_{k / k} {Φ}_{k}^{T} + {Γ}_{k} {Q}_{k} {Γ}_{k}^{T}$ ${ID}_{k + 1 / k} = {Φ}_{ID , k} {ID}_{k / k} + {Q}_{ID , k}$ where:
*Φ_{ID,k}* = 1̅*_{I*J}*; 1̅ ≡ identity matrix ${Q}_{ID , k} = \left[\begin{matrix}{Q}_{1 , k} & 0 & 0 \\ 0 & ⋱ & 0 \\ 0 & 0 & {Q}_{J . k}\end{matrix}\right]$ ${Q}_{j , k} = \left[\begin{matrix}{q}_{j , 1 , k} & 0 & 0 & 0 \\ 0 & {q}_{j , 2 , k} & 0 & 0 \\ 0 & 0 & {q}_{j , 3 , k} & 0 \\ 0 & 0 & 0 & {q}_{j , 4 , k}\end{matrix}\right] ∀ j = 1 , … , J .$

### Association Checks

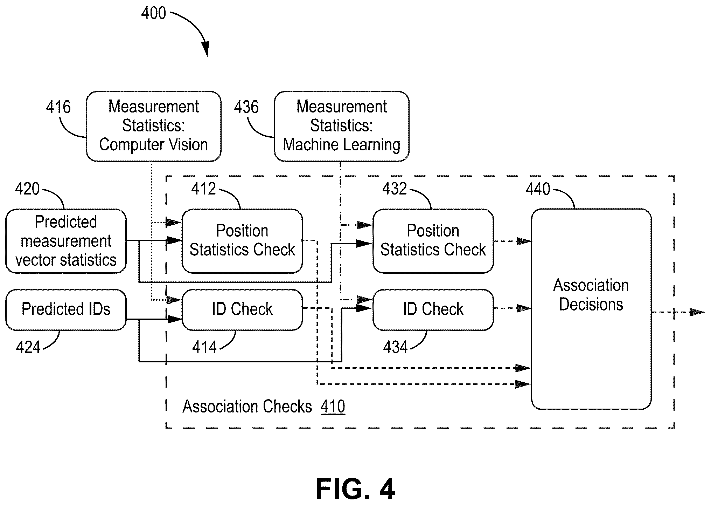

Figure 4 is a functional block diagram of a method 400 for providing association checks, according to an example implementation. An association checks function 410 includes a first position statistics check 412 and a first ID check 414, which are operative to receive measurement statistics including position statistics computed by a computer vision algorithm (block 416). In addition, first position statistics check 412 is configured to receive predicted measurement vector statistics (block 420), and first ID check 414 is configured to receive predicted IDs (block 424).

The association checks function 410 also includes a second position statistics check 432, and a second ID check 434, which are operative to receive measurement statistics including position statistics computed by a machine learning algorithm (block 436). In addition, second position statistics check 432 is configured to receive the predicted measurement vector statistics (from block 420), and second ID check 434 is configured to receive the predicted IDs (from block 424).

An association decisions module 440 is configured to receive the output from first position statistics check 412 and first ID check 414, and the output from second position statistics check 432 and second ID check 434. The association decisions module 440 is operative to determine if the results of the first position statistics check 412 and first ID check 414 pass or fail, and if the results of the second position statistics check 432 and second ID check 434 pass or fail.

### Measurement Model

The general measurement equations utilized in the present navigation system are listed as follows: ${r}_{m , b , ji}^{LZ} = {p}^{LZ} + {ρ}_{j , i}^{LZ} + {v}_{j , i}^{LZ} ; E \left[{v}_{j , i}^{LZ}\right] = 0 ; E \left[{v}_{j , i}^{LZ}{\left({v}_{j , i}^{LZ}\right)}^{T}\right] = {R}_{j , i} .$

The general measurement (error) model equations utilized in the present navigation system are listed as follows: $δ \vec{z} = {\vec{r}}_{m , b , j , i} - {\vec{r}}_{b , j , i} ∀ i = 1 , … , I$ ${δz}^{LZ} = {r}_{m , b , j , i}^{LZ} + {r}_{b , j , i}^{LZ} = {δp}^{LZ} + {δρ}_{j , i}^{LZ} + {v}_{j , i}^{LZ} .$

### Association Checks: Compute Statistics

The association checks function computes statistics using the equations listed as follows. For computer vision (CV), a measurement constraint is defined by the terms: ${δρ}_{CV , g , i}^{LZ} , {S}_{CV , g , i} ∀ g = 1 , … , G ;$ where:
*G* ≡ Number of extracted markers by CV.
The association checks function cycles through all the extracted markers, G, and compares their measured positions to all predicted marker locations, J, using the following equations: $\begin{matrix}{δρ}_{CV , \overline{g} , i , k + 1}^{LZ} = {ρ}_{CV , m , g , i , k + 1}^{LZ} - {ρ}_{j , i , k + 1 / k}^{LZ} \\ = {r}_{CV , m , b , g , i , k + 1}^{LZ} - {p}_{k + 1 / k}^{LZ} - {v}_{g , i , k + 1}^{LZ} - {ρ}_{j , i , k + 1 / k}^{LZ}\end{matrix}$ ${S}_{CV , \overline{g} , i , k + 1}^{LZ} = {\left({δρ}_{CV , g , i , k + 1}^{LZ}\right)}^{T} \left(\begin{matrix}{R}_{CV , g , i , k + 1} + {P}_{p , k + 1 / k} + \\ {R}_{ρ , j , i , k + 1 / k}\end{matrix}\right) {δρ}_{CV , g , i , k + 1}^{LZ} ≡ innovation distance .$

For machine learning (ML), a measurement constraint is defined by the terms: ${δρ}_{ML , l , i}^{LZ} , {S}_{ML , l , i} ∀ l = 1 , .. , L ;$ where:
*L* ≡ Number of extracted markers by ML.
The association checks function cycles through all the extracted markers, *L*, and compares their measured positions to all predicted marker locations, *J*, using the following equations: $\begin{matrix}{δρ}_{ML , \overline{l} , i , k + 1}^{LZ} = {ρ}_{ML , m , l , i , k + 1}^{LZ} - {ρ}_{j , i , k + 1 / k}^{LZ} \\ = {r}_{ML , m , b , l , i , k + 1}^{LZ} - {p}_{k + 1 / k}^{LZ} - {v}_{g , i , k + 1}^{LZ} - {ρ}_{j , i , k + 1 / k}^{LZ}\end{matrix}$ $\begin{matrix}{S}_{ML , \overline{l} , i , k + 1}^{LZ} = {\left({δρ}_{ML , l , i , k + 1}^{LZ}\right)}^{T} \left({R}_{ML , l , i , k + 1}+{P}_{p , k + \frac{1}{k}}+{R}_{ρ , j , i , k + \frac{1}{k}}\right) {δρ}_{ML , l , i , k + 1}^{LZ} \\ ≡ innovation distance .\end{matrix}$

### Association Check: Four Marker Corners and IDs

The association check used for four marker corners and IDs in the operational method of the present navigation system is described as follows. For computer vision, the method selects an association threshold, *ε*_{*CV,*4}, cycles through the innovation distances, and compares them to the association threshold as follows: ${S}_{CV , \overline{g} , i , k + 1}^{LZ} \leq or > {ε}_{CV , 4} .$ If ${S}_{CV , \overline{g} , i , k + 1}^{LZ} \leq {ε}_{CV , 4} ∀ i , i = 1 , … , I$, then there is position association. In this case, predicted marker positions statistically match the measured marker positions. If ${S}_{CV , \overline{g} , i , k + 1}^{LZ} > {ε}_{CV , 4}$ for any *i,* then the markers are not associated. In this case, there is a predicted marker corner position and measurement corner position mismatch.

For machine learning, the method selects an association threshold, *ε_{ML,4},* cycles through the innovation distances, and compares them to the association threshold as follows: ${S}_{ML , \overline{l} , i , k + 1}^{LZ} \leq or > {ε}_{ML , 4} .$ If ${S}_{ML , \overline{l} , i , k + 1}^{LZ} \leq {ε}_{ML , 4} ∀ i , i = 1 , … , I$, then there is position association. In this case, predicted marker positions statistically match the measured marker positions. If ${S}_{ML , \overline{l} , i , k + 1}^{LZ} > {ε}_{ML , 4}$ for any *i,* then the markers are not associated. In this case, there is a predicted marker corner position and measurement corner position mismatch.

A first association check approach uses a statistical distance test, or other known distance-check techniques, to compare the predicted corner positions from the navigation system to the extracted corner positions from the computer vision and machine learning approaches. This check cycles through all possible comparisons to identify the most likely comparison. All four (three) corner positions must pass the statistical distance test. This prevents extracted corner positions from mirrored buildings or the background from corrupting the navigation solution.

A second association check approach uses marker IDs as the association check. The ID comparison is between associations that pass the first association check, and the associations performed by the computer vision and machine learning algorithms, which provide a marker number. The marker number is associated with the tracked markers from the navigation filter.

Table 2 below summarizes the association check and resulting actions for four marker corners and IDs.

**Table 2**

| **Four Marker Corners and IDs** | | |
|---|---|---|
| Association Check | Result | Actions |
| Position Statistics - IDs | Pass - Match | Use measurement; inform CV / ML algorithm that extraction (corners in the predicted positions) and ID association performed correctly. |
| | Pass - No Match | Use measurement; inform CV / ML algorithm that extraction performed correctly (corners in the predicted positions) but ID association performed incorrectly. |
| | Fail - Match | Do not use measurement; inform CV / ML algorithm that corners were not extracted in predicted positions. |
| | Fail - No Match | Send to tentative track function. |

### Association Check: Three Marker Corners

The association check used for three marker corners in the operational method of the present navigation system is described as follows.

For computer vision, the method selects an association threshold, *ε_{CV,3},* cycles through the innovation distances, and compares them to the association threshold as follows: ${S}_{CV , \overline{g} , i , k + 1}^{LZ} \leq or > {ε}_{CV , 3} .$ If ${S}_{CV , \overline{g} , i , k + 1}^{LZ} \leq {ε}_{CV , 3} ∀ i , i = 1 , … , I$, then there is position association. In this case, predicted marker corner positions statistically match the measured marker corner positions. If ${S}_{CV , \overline{g} , i , k + 1}^{LZ} > {ε}_{CV , 3}$ for any *i*, then the markers are not associated. In this case, there is a predicted marker corner position and measurement marker corner position mismatch.

For machine learning, the method selects an association threshold, *ε_{ML,3},* cycles through the innovation distances, and compares them to the association threshold as follows: ${S}_{ML , \overline{l} , i , k + 1}^{LZ} \leq or > {ε}_{ML , 3} .$ If ${S}_{ML , \overline{l} , i , k + 1}^{LZ} \leq {ε}_{ML , 3} ∀ i , i = 1 , … , I$*,* then there is position association. In this case, predicted marker corner positions statistically match the measured marker corner positions. If ${S}_{ML , \overline{l} , i , k + 1}^{LZ} > {ε}_{ML , 3}$ for any *i,* then the markers are not associated. In this case, there is a predicted marker corner position and measured marker corner position mismatch.

Table 3 below summarizes the association check and resulting actions for three marker corners.

**Table 3**

| **Three Marker Corners** | | |
|---|---|---|
| Association Check | Result | Actions |
| Position Statistics | Pass | Use measurement; inform CV / ML algorithm that extraction performed correctly (corners in the predicted positions). |
| | Fail | Do not use measurement; inform CV / ML algorithm that corners were not extracted in predicted positions. |

### Measurement Update

The measurement model equations utilized in the present navigation system are listed as follows: ${δz}_{k + 1}^{LZ} = {H}_{k + 1} {δX}_{k + 1 / k}$ ${H}_{k + 1} = \left[{\vec{1}}_{3} {0}_{3 \times 3} {0}_{3 \times 3} {0}_{3 \times 3} {0}_{3 \times 3} {\vec{1}}_{3}\right] .$ There are three options for computer vision and machine learning measurements that pass the association checks: 1) only computer vision measurements pass the association checks; 2) only machine learning measurements pass the association checks; or 3) both computer vision and machine learning measurements pass the association checks with measured marker corner positions that match predicted marker corner positions.

If only the computer vision measurements pass the association checks, then the Kalman gain is computed as: ${K}_{CV , k + 1} = {P}_{k + 1 / k} {H}_{k + 1}^{T} {\left({R}_{CV , \overline{g} , i , k + 1}+{H}_{k + 1}{P}_{k + 1 / k}{H}_{k + 1}^{T}\right)}^{- 1} ;$ the updated state error vector statistics are computed as: ${δX}_{k + 1 / k + 1} = {δX}_{k + 1 / k} + {K}_{CV , k + 1} {δz}_{CV , \overline{g} , i , k + 1}^{LZ}$ ${P}_{k + 1 / k + 1} = \left(\vec{1}-{K}_{CV , k + 1}{H}_{k + 1}\right) {P}_{k + 1 / k} ; and$ an ID update is performed, where: ${ID}_{k + 1 / k + 1} = {ID}_{k + 1 / k} .$

If only the machine learning measurements pass the association checks, then the Kalman gain is computed as: ${K}_{ML , k + 1} = {P}_{k + 1 / k} {H}_{k + 1}^{T} {\left({R}_{ML , \overline{l} , i , k + 1}+{H}_{k + 1}{P}_{k + 1 / k}{H}_{k + 1}^{T}\right)}^{- 1} ;$ the updated state error vector statistics are computed as: ${δX}_{k + 1 / k + 1} = {δX}_{k + 1 / k} + {K}_{ML , k + 1} {δz}_{ML , \overline{l} , i , k + 1}^{LZ}$ ${P}_{k + 1 / k + 1} = \left(\vec{1}-{K}_{ML , k + 1}{H}_{k + 1}\right) {P}_{k + 1 / k} ;$ and
an ID update is performed, where: ${ID}_{k + 1 / k + 1} = {ID}_{k + 1 / k} .$

If both computer vision and machine learning measurements pass the association checks that match the same predicted marker corner positions, then the update equations are applied sequentially using the measurement with the smallest variance first. If |*R*_{*CV,g̅,i,k+*1}|₂ ≤ |*R*_{*ML,l,i,k+*1}|₂, then the computer vision measurements are applied first using the following equations: ${K}_{CV , k + 1} = {P}_{k + 1 / k} {H}_{k + 1}^{T} {\left({R}_{CV , \overline{g} , i , k + 1}+{H}_{k + 1}{P}_{k + 1 / k}{H}_{k + 1}^{T}\right)}^{- 1}$ ${δX}_{k + 1 / k + 1} = {δX}_{k + 1 / k} + {K}_{CV , k + 1} {δz}_{CV , \overline{g} , i , k + 1}^{LZ}$ ${P}_{k + 1 / k + 1} = \left(\vec{1}-{K}_{CV , k + 1}{H}_{k + 1}\right) {P}_{k + 1 / k}$ ${K}_{ML , k + 1} = {P}_{k + 1 / k + 1} {H}_{k + 1}^{T} {\left({R}_{ML , \overline{l} , i , k + 1}+{H}_{k + 1}{P}_{k + 1 / k + 1}{H}_{k + 1}^{T}\right)}^{- 1}$ ${δX}_{k + 1 / k + 1} = {δX}_{k + 1 / K + 1} + {K}_{ML , k + 1} {δz}_{ML , \overline{l} , i , k + 1}^{LZ}$ ${P}_{k + 1 / k + 1} = \left(\vec{1}-{K}_{ML , k + 1}{H}_{k + 1}\right) {P}_{k + 1 / k + 1}$ ${ID}_{k + 1 / k + 1} = {ID}_{k + 1 / k} .$ If |*R*_{*CV,g̅,i,k+*1}|₂ > |*R*_{*ML,l̅,i,k+*1}|₂*,* then the machine learning measurements are applied first using the following equations: ${K}_{ML , k + 1} = {P}_{k + 1 / k} {H}_{k + 1}^{T} {\left({R}_{ML , \overline{l} , i , k + 1}+{H}_{k + 1}{P}_{k + 1 / k}{H}_{k + 1}^{T}\right)}^{- 1}$ ${δX}_{k + 1 / k + 1} = {δX}_{k + 1 / k} + {K}_{ML , k + 1} {δz}_{ML , \overline{l} , i , k + 1}^{LZ}$ ${P}_{k + 1 / k + 1} = \left(\vec{1}-{K}_{ML , k + 1}{H}_{k + 1}\right) {P}_{k + 1 / k}$ ${K}_{CV , k + 1} = {P}_{k + 1 / k + 1} {H}_{k + 1}^{T} {\left({R}_{CV , \overline{g} , i , k + 1}+{H}_{k + 1}{P}_{k + 1 / k + 1}{H}_{k + 1}^{T}\right)}^{- 1}$ ${δX}_{k + 1 / k + 1} = {δX}_{k + 1 / k + 1} + {K}_{CV , k + 1} {δz}_{CV , \overline{g} , i , k + 1}^{LZ}$ ${P}_{k + 1 / k + 1} = \left(\vec{1}-{K}_{CV , k + 1}{H}_{k + 1}\right) / {P}_{k + 1 / k + 1}$ ${ID}_{k + 1 / k + 1} = {ID}_{k + 1 / k} .$

### Tentative Marker Positions

Tentative markers (TM) include the four marker corners positions with IDs that did not pass the position checks and ID checks. In this case, the state vector is represented by: ${X}_{TM} = \left[{ρ}_{j , i}^{LZ}\right] ∀ j = 1 , … , J ; i = 1 , … , I$ $ID = \left[{ID}_{j}\right] ∀ j = 1 , … , J$ where:
*J* ≡ number of markers
*I* = 4 ≡ number of marker corners.
The marker corner statistics are predicted using the following equations: ${X}_{TM , k + 1 / k} = {Φ}_{TM , k} {X}_{TM , k / k}$ ${P}_{TM , k + 1 / k} = {Φ}_{TM , k} {P}_{TM , k / k} {Φ}_{TM , k}^{T} + {Q}_{TM , k}$ ${ID}_{k + 1 / k} = {Φ}_{ID , k} {ID}_{k / k} + {Q}_{ID , TM , k}$ where: ${Φ}_{TM , k} = {\vec{1}}_{I ∗ J}$ ${Q}_{TM , j , k} = \left[\begin{matrix}{q}_{j , 1 , k} & 0 & 0 & 0 \\ 0 & {q}_{j , 2 , k} & 0 & 0 \\ 0 & 0 & {q}_{j , 3 , k} & 0 \\ 0 & 0 & 0 & {q}_{j , 4 , k}\end{matrix}\right] ∀ j = 1 , … , J$ ${Q}_{TM , ID , k} = \left[\begin{matrix}{Q}_{1 , k} & 0 & 0 \\ 0 & ⋱ & 0 \\ 0 & 0 & {Q}_{J . k}\end{matrix}\right] .$

If a measurement/ID does not pass the association checks, then there may be a new marker in view or a false marker (caused by the sensor, weather, environment, or the like). This measurement/ID gets sent to a tentative marker (TM) module. At the TM module, this measurement/ID is compared to all the other corners/IDs currently tracked to determine if there is an association or not. If there is an association, then the measurements are fused with the predictions, and the number of times the corner positions/IDs have been seen (N) is increased by 1 (N = N+1). N is compared to M, where M is a user selected number (the number of times the corners/ID have to been seen to be promoted from tentative status to actual status). If N = M, then the corner positions/ID are moved to the state vector and deleted from the TM module. If N < M, then the corner positions/ID remains in tentative status. The whole cycle repeats itself at the next measurement epoch. If there is not an association, then new corner positions/ID are initiated, and the counter (N) is set to 1.

Further details related to using tentative tracks are described in U.S. Patent No. 9,507,020, entitled UNMANNED AIRCRAFT SYSTEMS SENSE AND AVOID SENSOR FUSION TRACK INITIALIZATION, the disclosure of which is incorporated by reference herein.

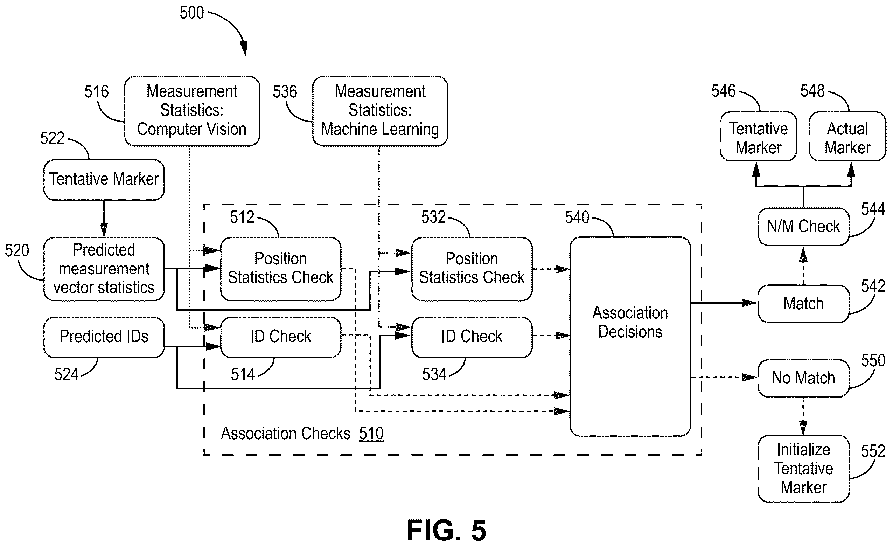

Figure 5 is a functional block diagram of a method 500 for providing association checks for tentative marker positions, according to an example implementation. An association checks function 510 includes a first position statistics check 512 and a first ID check 514, which are operative to receive measurement statistics including position statistics computed by the computer vision algorithm (block 516). In addition, first position statistics check 512 is configured to receive predicted measurement vector statistics (block 520) for a tentative marker 522, and first ID check 514 is configured to receive predicted IDs (block 524).

The association checks function 510 also includes a second position statistics check 532, and a second ID check 534, which are operative to receive measurement statistics including position statistics computed by a machine learning algorithm (block 536). In addition, second position statistics check 532 is configured to receive the predicted measurement vector statistics (from block 520), and second ID check 534 is configured to receive the predicted IDs (from block 524).

An association decisions module 540 is configured to receive the output from first position statistics check 512 and first ID check 514, and the output from second position statistics check 532 and second ID check 534. The association decisions module 540 is operative to determine if the results of the first position statistics check 512 and first ID check 514 pass or fail, and if the results of the second position statistics check 532 and second ID check 534 pass or fail.

For example, if association decisions module 540 determines that the results of the first position statistics check 512 and first ID check 514 pass and there is a match (block 542), then the associated measurement is used. An N / M initialization check 544 is performed to determine if the associated marker should remain a tentative marker 546 or be promoted to an actual marker 548.

If association decisions module 540 determines that the results of the first position statistics check 512 and first ID check 514 fail, and there is no match (block 550), then marker corners are used to initialize a tentative marker (block 552).

### Measurement Models

For the computer vision algorithm, the measurement model is defined by the expression: ${ρ}_{CV , m , g , i , k + 1}^{LZ} = {r}_{CV , m , b , g , i , k + 1}^{LZ} - {p}_{k + 1 / k + 1}^{LZ} - {v}_{CV , g , i , k + 1}^{LZ} ;$ and
the measurement equation is defined by the expression: ${z}^{LZ} = {ρ}_{CV , m , g , i , k + 1}^{LZ} = {H}_{TM} {ρ}_{j , i}^{LZ} + {v}_{CV , j , i}^{LZ}$ where: ${H}_{TM} = {\vec{1}}_{3} .$

For the machine learning algorithm, the measurement model is defined by the expression: ${ρ}_{ML , m , l , i , k + 1}^{LZ} = {r}_{ML , m , b , l , i , k + 1}^{LZ} - {p}_{k + 1 / k + 1}^{LZ} - {v}_{ML , g , l , k + 1}^{LZ} ;$ and
the measurement equation is defined by the expression: ${z}^{LZ} = {ρ}_{ML , m , l , i , k + 1}^{LZ} = {H}_{TM} {ρ}_{j , i}^{LZ} + {v}_{MLj , i}^{LZ} .$

### Association Checks: Compute Statistics

The association checks function computes statistics using the equations listed as follows. For the computer vision algorithm, a measurement constraint is defined by the terms: ${δρ}_{TM , CV , g , i}^{LZ} , {S}_{TM , CV , g , i} ∀ g = 1 , .. , \overline{G} ;$ where:
*G̅* ≡ Number of extracted markers by CV
and not associated with a current marker.
The association checks function cycles through all the markers, *G̅*, and compares their measured positions to all predicted marker positions, J, using the following equations: $\begin{matrix}{δρ}_{TM , CV , \overline{g} , i , k + 1}^{LZ} & = {ρ}_{CV , m , g , i , k + 1}^{LZ} - {ρ}_{j , i , k + 1 / k}^{LZ} \\ & = {r}_{CV , m , b , g , i , k + 1}^{LZ} - {p}_{k + 1 / k + 1}^{LZ} - {v}_{g , i , k + 1}^{LZ} - {ρ}_{j , i , k + 1 / k}^{LZ}\end{matrix}$ ${S}_{TM , CV , \overline{g} , i , k + 1}^{LZ} = {\left({δρ}_{CV , g , i , k + 1}^{LZ}\right)}^{T} \left(\begin{matrix}{R}_{CV , g , i , k + 1} + {P}_{p , k + 1 / k + 1} + \\ {R}_{ρ , j , i , k + 1 / k}\end{matrix}\right) {δρ}_{CV , g , i , k + 1}^{LZ} ≡ innovation distance .$

For the machine learning algorithm, a measurement constraint is defined by the terms: ${δρ}_{TM , ML , l , i}^{LZ} , {S}_{TM , ML , l , i} ∀ l = 1 , .. , \overline{L} ;$ where:
*L̅* ≡ Number of extracted markers by ML
and not associated with a current marker.
The association checks function cycles through all the markers, *L̅*, and compares their measured positions to all predicted marker positions, *J*, using the following equations: $\begin{matrix}{δρ}_{TM , ML , \overline{l} , i , k + 1}^{LZ} & = {ρ}_{ML , m , l , i , k + 1}^{LZ} - {ρ}_{j , i , k + 1 / k}^{LZ} \\ & = {r}_{ML , m , b , l , i , k + 1}^{LZ} - {p}_{k + 1 / k + 1}^{LZ} - {v}_{g , i , k + 1}^{LZ} - {ρ}_{j , i , k + 1 / k}^{LZ}\end{matrix}$ ${S}_{TM , ML , \overline{l} , i , k + 1}^{LZ} = {\left({δρ}_{ML , l , i , k + 1}^{LZ}\right)}^{T} \left(\begin{matrix}{R}_{ML , l , i , k + 1} + {P}_{p , k + 1 / k + 1} + \\ {R}_{ρ , j , i , k + 1 / k}\end{matrix}\right) {δρ}_{ML , l , i , k + 1}^{LZ} ≡ innovation distance .$

### Association Check: Four Marker Corners and IDs

The association check used for four marker corners and IDs in the operational method for the tentative markers is described as follows. For the computer vision algorithm, the method employs a user-selected association threshold, *ε_{CV,4},* cycles through the innovation distances, and compares them to the association threshold as follows: ${S}_{CV , \overline{g} , i , k + 1}^{LZ} \leq or > {ε}_{CV , 4} .$ If ${S}_{CV , \overline{g} , i , k + 1}^{LZ} \leq {ε}_{CV , 4} ∀ i , i = 1 , … , I$*,* then there is position association. In this case, predicted marker positions statistically match the measured marker positions. If ${S}_{CV , \overline{g} , i , k + 1}^{LZ} > {ε}_{CV , 4}$ for any *i,* then the markers are not associated. In this case, there is a predicted marker corner position and measurement corner position mismatch.

For the machine learning algorithm, the method employs a user-selected association threshold, *ε_{ML,4},* cycles through the innovation distances, and compares them to the association threshold as follows: ${S}_{ML , \overline{l} , i , k + 1}^{LZ} \leq or > {ε}_{ML , 4} .$ If ${S}_{ML , \overline{l} , i , k + 1}^{LZ} \leq {ε}_{ML , 4} ∀ i , i = 1 , … , I$*,* then there is position association. In this case, predicted marker positions statistically match the measured marker positions. If ${S}_{ML , \overline{l} , i , k + 1}^{LZ} > {ε}_{ML , 4}$ for any *i*, then the markers are not associated. In this case, there is a predicted marker corner position and measurement corner position mismatch.

A first association check approach uses a statistical distance test, or other known distance-check techniques, to compare the predicted corner positions from the navigation system to the extracted corner positions from the computer vision and machine learning algorithms. This check cycles through all possible comparisons to identify the most likely comparison. All four corner positions must pass the statistical distance test. This prevents extracted corner positions from mirrored buildings or the background from corrupting the navigation solution.

A second association check approach uses marker IDs as the association check. The ID comparison is between associations that pass the first association check, and the associations performed by the computer vision and machine learning algorithms, which provide a marker number. The marker number is associated with the tracked markers from the navigation filter.

Table 4 below summarizes the association check and resulting actions used for four marker corners and IDs for tentative markers.

**Table 4**

| **Four Marker Corners and IDs** | | |
|---|---|---|
| Association Check | Result | Actions |
| Position Statistics - IDs | Pass - Match | Use measurement; inform CV / ML algorithm that extraction (corners in the predicted positions) and ID association performed correctly. |
| | Pass - No Match | Use measurement; inform CV / ML algorithm that extraction performed correctly (corners in the predicted positions) but ID association performed incorrectly. |
| | Fail - Match | Do not use measurement; inform CV / ML algorithm that corners were not extracted in predicted positions. |
| | Fail - No Match | Initialize tentative marker corners. |

### Measurement Update

If only the computer vision measurements pass the association checks, then the Kalman gain is computed as: ${K}_{TM , CV , k + 1} = {P}_{TM , k + 1 / k} {H}_{TM , k + 1}^{T} {\left({R}_{CV , \overline{g} , i , k + 1}+{H}_{TM , k + 1}{P}_{TM , k + 1 / k}{H}_{TM , k + 1}^{T}\right)}^{- 1} ;$
the updated state error vector statistics are computed as: ${X}_{TM , k + 1 / k + 1} = {X}_{TM , k + 1 / k} + {K}_{TM , CV , k + 1} {δρ}_{TM , CV , \overline{g} , i , k + 1}^{LZ}$ ${P}_{TM , k + 1 / k + 1} = \left(\vec{1}-{K}_{TM , CV , k + 1}{H}_{TM , k + 1}\right) {P}_{TM , k + 1 / k} ;$
an ID update is performed, where: ${ID}_{TM , k + 1 / k + 1} = {ID}_{TM , k + 1 / k} ;$ and
a measurement counter update is performed:
   *N = N+1.*

If only the machine learning measurements pass the association checks, then the Kalman gain is computed as: ${K}_{TM , ML , k + 1} = {P}_{TM , k + 1 / k} {H}_{TM , k + 1}^{T} {\left({R}_{ML , \overline{l} , i , k + 1}+{H}_{TM , k + 1}{P}_{TM , k + 1 / k}{H}_{TM , k + 1}^{T}\right)}^{- 1} ;$
the updated state error vector statistics are computed as: ${X}_{TM , k + 1 / k + 1} = {X}_{TM , k + 1 / k} + {K}_{TM , ML , k + 1} {δρ}_{TM , ML , \overline{l} , i , k + 1}^{LZ}$ ${P}_{TM , k + 1 / k + 1} = \left(\vec{1}-{K}_{TM , ML , k + 1}{H}_{TM , k + 1}\right) {P}_{TM , k + 1 / k} ;$
an ID update is performed, where: ${ID}_{TM , k + 1 / k + 1} = {ID}_{TM , k + 1 / k} ;$ and
a measurement counter update is performed: $N = N + 1 .$

If both computer vision and machine learning measurements pass the association checks that match the same predicted marker corner positions, then the update equations are applied sequentially using the measurement with the smallest variance first. If |*R*_{*CV,g̅,i,k+*1}|₂, ≤ |*R*_{*ML,l̅,i,k+*1}|₂, then the computer vision measurements are applied first using the following equations: ${K}_{TM , CV , k + 1} = {P}_{TM , k + 1 / k} {H}_{TM , k + 1}^{T} {\left({R}_{CV , \overline{g} , i , k + 1}+{H}_{TM , k + 1}{P}_{TM , k + 1 / k}{H}_{TM , k + 1}^{T}\right)}^{- 1}$ ${X}_{TM , k + 1 / k + 1} = {X}_{TM , k + 1 / k} + {K}_{TM , CV , k + 1} {δρ}_{TM , CV , \overline{g} , i , k + 1}^{LZ}$ ${P}_{TM , k + 1 / k + 1} = \left(\vec{1}-{K}_{TM , CV , k + 1}{H}_{TM , k + 1}\right) {P}_{TM , k + 1 / k}$ ${K}_{TM , ML , k + 1} = {P}_{TM , k + 1 / k + 1} {H}_{TM , k + 1}^{T} {\left({R}_{ML , \overline{l} , i , k + 1}+{H}_{TM , k + 1}{P}_{TM , k + 1 / k + 1}{H}_{TM , k + 1}^{T}\right)}^{- 1}$ ${X}_{TM , k + 1 / k + 1} = {X}_{TM , k + 1 / k + 1} {K}_{TM , ML , k + 1} {δρ}_{TM , ML , \overline{l} , i , k + 1}^{LZ}$ ${P}_{TM , k + 1 / k + 1} = \left(\vec{1}-{K}_{TM , ML , k + 1}{H}_{TM , k + 1}\right) {P}_{TM , k + 1 / k + 1}$ ${ID}_{k + 1 / k + 1} = {ID}_{k + 1 / k} .$ If |*R*_{*CV*,*g̅*,*i,k*+1}|₂ > |*R*_{*ML,l̅,i,k+*1}|₂, then the machine learning measurements are applied first using the following equations: ${K}_{TM , ML , k + 1} = {P}_{TM , k + 1 / k} {H}_{TM , k + 1}^{T} {\left({R}_{ML , \overline{l} , i , k + 1}+{H}_{TM , k + 1}{P}_{TM , k + 1 / k}{H}_{TM , k + 1}^{T}\right)}^{- 1}$ ${X}_{TM , k + 1 / k + 1} = {X}_{TM , k + 1 / k + 1} {K}_{TM , ML , k + 1} {δρ}_{TM , ML , \overline{l} , i , k + 1}^{LZ}$ ${P}_{TM , k + 1 / k + 1} = \left(\vec{1}-{K}_{TM , ML , k + 1}{H}_{TM , k + 1}\right) {P}_{TM , k + 1 / k}$ ${K}_{TM , CV , k + 1} = {P}_{TM , k + 1 / k + 1} {H}_{TM , k + 1}^{T} {\left({R}_{CV , \overline{g} , i , k + 1}+{H}_{TM , k + 1}{P}_{TM , k + 1 / k + 1}{H}_{TM , k + 1}^{T}\right)}^{- 1}$ ${X}_{TM , k + 1 / k + 1} = {X}_{TM , k + 1 / k + 1} {K}_{TM , CV , k + 1} {δρ}_{TM , CV , \overline{g} , i , k + 1}^{LZ}$ ${P}_{TM , k + 1 / k + 1} = \left(\vec{1}-{K}_{TM , CV , k + 1}{H}_{TM , k + 1}\right) {P}_{TM , k + 1 / k + 1}$ ${ID}_{k + 1 / k + 1} = {ID}_{k + 1 / k} .$ The measurement counter update is then performed: $N = N + 1 .$

### Initialize New Tentative Markers

If only the computer vision measurements pass the association checks, then a new tentative marker is initialized for the measurement using the following equations: ${ρ}_{j , i}^{LZ} = {ρ}_{CV , m , \overline{g} , i , k + 1}^{LZ} = {r}_{CV , m , b , \overline{g} , i , k + 1}^{LZ} - {p}_{k + 1 / k + 1}^{LZ}$ ${P}_{TM , k + 1} = {R}_{CV , \overline{g} , k + 1} + {P}_{p , k + 1 / k + 1}$ ${ID}_{j , k + 1} = {ID}_{CV , j , k + 1} .$

If only the machine learning measurements pass the association checks, then a new tentative marker is initialized for the measurement using the following equations: ${ρ}_{j , i}^{LZ} = {ρ}_{ML , m , \overline{l} , i , k + 1}^{LZ} = {r}_{ML , m , b , \overline{l} , i , k + 1}^{LZ} - {p}_{k + 1 / k + 1}^{LZ}$ ${P}_{TM , k + 1} = {R}_{ML , \overline{l} , k + 1} + {P}_{p , k + 1 / k + 1}$ ${ID}_{j , k + 1} = {ID}_{ML , j , k + 1} .$

If both computer vision and machine learning measurements pass the association checks, passing both the position and ID tests, then an information filter or other techniques known to those skilled in the art are used to initialize new tentative markers using the following equations: ${P}_{CV , k + 1} = {R}_{CV , \overline{g} , k + 1} + {P}_{p , k + 1 / k + 1}$ ${P}_{ML , k + 1} = {R}_{ML , \overline{l} , k + 1} + {P}_{p , k + 1 / k + 1}$ ${P}_{TM , k + 1} = {\left({\left({P}_{CV , k + 1}\right)}^{- 1}+{\left({P}_{ML , k + 1}\right)}^{- 1}\right)}^{- 1}$ ${ρ}_{j , i}^{LZ} = {P}_{TM , k + 1} \left({\left({P}_{CV , k + 1}\right)}^{- 1}{ρ}_{CV , m , \overline{g} , i , k + 1}^{LZ}+{\left({P}_{ML , k + 1}\right)}^{- 1}{ρ}_{ML , m , \overline{l} , i , k + 1}^{LZ}\right)$ ${ID}_{j , k + 1} = {ID}_{CV , j , k + 1} = {ID}_{ML , j , k + 1} .$

Table 5 below summarizes the association check and resulting actions for four marker corners and IDs when initializing new tentative markers.

**Table 5**

| **Four Marker Corners and IDs** | | |
|---|---|---|
| Association Check | Result | Actions |
| Position Statistics - IDs | Pass - Match | Use both CV and ML measurements. |
| | Pass - No Match | Compare both IDs to marker library IDs using position with a user selected threshold; if there is an ID match, then use the measurements that pass the ID match test. |
| | Fail - Match | Compare both position measurements to marker library positions with the same ID; if the measured positions are within a user selected threshold, then use the measurements that pass the kinematics test. |
| | Fail - No Match | Initialize tentative marker corners using measurements separately. |

### Landing Zone Kinematics

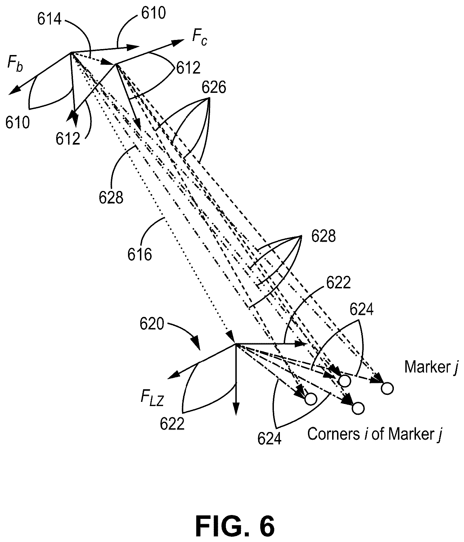

An example of landing zone kinematics that can be used in the present system and method is illustrated in the vector diagram of Figure 6. A body frame, *F_{b},* for a vehicle is represented by 610. A camera frame, *F_{c}*, for an onboard camera is represented by 612. A known camera position vector relative to the body frame, *̅p̅*̅_{*c*/}*_{b},* is represented by a vector 614. A vehicle position vector, *̅p̅*̅, is represented by a vector 616. A landing zone 620 has a marker *j* that includes four corners *i.* A landing zone frame, *F_{LZ},* is represented by 622. A position vector of a respective corner *i* of marker *j* from the landing zone frame, *ρ̅_{j,i},* is represented by respective vectors 624 (*ρ̅_{j,i}* ∀ *i = 1, ...,I*; *I =* 4). A position vector of a respective corner *i* of marker j from the camera frame, *r̅_{j,i},* is represented by respective vectors 626 (*r̅_{j,i}* ∀ *i =* 1, *... , I*; *I* = 4). A position vector of a respective corner *i* of marker *j* from the body frame, *r̅_{b,j,i},* is represented by respective vectors 628 (*r̅_{b,j,i}* ∀ *i =* 1, ... , *I*; *I =* 4). As shown, *r̅_{b,j,i} = p̅*_{*c*/*b*} + *r̅_{j,i}* ∀ *i* = *1,* ... ,*I*; *I* = 4.

The processing units and/or other computational devices used in the method and system described herein may be implemented using software, firmware, hardware, or appropriate combinations thereof. The processing unit and/or other computational devices may be supplemented by, or incorporated in, specially designed application-specific integrated circuits (ASICs) or field programmable gate arrays (FPGAs). In some implementations, the processing unit and/or other computational devices may communicate through an additional transceiver with other computing devices outside of the navigation system, such as those associated with a management system, or computing devices associated with other subsystems controlled by the management system. The processing unit and/or other computational devices can also include or function with software programs, firmware, or other computer readable instructions for carrying out various process tasks, calculations, and control functions used in the methods and systems described herein.

The methods described herein may be implemented by computer executable instructions, such as program modules or components, which are executed by at least one processor or processing unit. Generally, program modules include routines, programs, objects, data components, data structures, algorithms, and the like, which perform particular tasks or implement particular abstract data types.

Instructions for carrying out the various process tasks, calculations, and generation of other data used in the operation of the methods described herein can be implemented in software, firmware, or other computer readable instructions. These instructions are typically stored on appropriate computer program products that include computer readable media used for storage of computer readable instructions or data structures. Such a computer readable medium may be available media that can be accessed by a general purpose or special purpose computer or processor, or any programmable logic device.

Suitable computer readable storage media may include, for example, nonvolatile memory devices including semi-conductor memory devices such as Random Access Memory (RAM), Read Only Memory (ROM), Electrically Erasable Programmable ROM (EEPROM), or flash memory devices; magnetic disks such as internal hard disks or removable disks; optical storage devices such as compact discs (CDs), digital versatile discs (DVDs), Blu-ray discs; or any other media that can be used to carry or store desired program code in the form of computer executable instructions or data structures.

### Example Embodiments

Example 1 includes a system comprising: at least one vision sensor mounted on a vehicle; an inertial measurement unit (IMU) operative to produce inertial measurements for the vehicle; a strapdown inertial navigation system (INS) on the vehicle and configured to receive the inertial measurements from the IMU; at least one first processor on the vehicle and operatively coupled to the at least one vision sensor; and at least one second processor on the vehicle and operatively coupled to the strapdown INS and the at least one first processor; wherein the at least one first processor hosts a first set of program modules operative to extract landing marker information, the first set of program modules comprising a computer vision module and a machine learning module that are configured to operate in parallel such that each performs a method comprising: receiving image data from the at least one vision sensor, the image data corresponding to at least one marker in a landing zone for the vehicle; extracting corner points for the at least one marker; resolving the corner points in a landing zone frame; computing position statistics for the vehicle with respect to the corner points; and associating the at least one marker with at least one marker identification (ID) in a marker library for the landing zone; wherein the at least one second processor hosts a second set of program modules operative to provide filter and association functions, the second set of program modules comprising a navigation filter, an association checks module, and a tentative markers module; wherein the strapdown INS is operative to generate estimated kinematic state statistics for the vehicle relative to the landing zone frame, based on output data from the IMU, and output data from the filter and association functions of the at least one second processor.

Example 2 includes the system of Example 1, wherein the association checks module is operative to: receive corner position statistics for markers computed by the computer vision module; receive corner position statistics for the markers computed by the machine learning module; perform a first position statistics check for the corner position statistics computed by the computer vision module based on predicted measurement vector statistics from the navigation filter; perform a second position statistics check for corner the position statistics computed by the machine learning module based on the predicted measurement vector statistics from the navigation filter; perform a first ID check for a marker associated with a marker ID in the marker library identified by the computer vision module and a predicted ID; and perform a second ID check for the marker associated with the marker ID in the marker library identified by the machine learning module and the predicted ID.

Example 3 includes the system of Example 2, wherein the association checks module is further operative to: determine whether results from the first position statistics check, and the first ID check, pass or fail; and determine whether results from the second position statistics check, and the second ID check, pass or fail.

Example 4 includes the system of any of Examples 2-3, wherein the association checks module is further operative to direct predicted state vector statistics, the predicted measurement vector statistics, measurement statistics from the computer vision module, and measurement statistics from the machine learning module to the navigation filter or the tentative markers module.

Example 5 includes the system of any of Examples 2-4, wherein the strapdown INS is operative to generate the estimated kinematic state statistics for the vehicle relative to the landing zone frame, based on the inertial measurements from the IMU, which is combined with output data from the navigation filter using a subtractor.

Example 6 includes the system of any of Examples 1-5, further comprising one or more aiding sensors communicatively coupled with the navigation filter.

Example 7 includes the system of Example 6, wherein the one or more aiding sensors comprise a global navigation satellite system (GNSS) receiver, an altimeter, a magnetometer, or a barometer.

Example 8 includes the system of any of Examples 1-7, wherein the at least one marker has three corner points or four corner points.

Example 9 includes the system of any of Examples 1-8, wherein the at least one marker comprises one or more fiducials, structured patterns, or Aruco codes.

Example 10 includes the system of any of Examples 1-9, wherein the vehicle is an uncrewed aircraft systems (UAS) vehicle.

Example 11 includes a method comprising: providing a first processing unit in a vehicle having a vision sensor mounted thereon, the first processing unit hosting a first set of program modules comprising a computer vision algorithm and a machine learning algorithm that operate in parallel such that each performs a process comprising: receiving image data from the vision sensor, the image data corresponding to a marker in a landing zone for the vehicle; extracting corner points for the marker in the landing zone; resolving the extracted corner points in a landing zone frame; computing position statistics for the vehicle with respect to the corner points; and associating the marker in the landing zone with a marker identification (ID) in a marker library for the landing zone; and providing a second processing unit in the vehicle, the second processing unit in communication with an onboard strapdown inertial navigation system (INS) and the first processing unit, the second processing unit hosting a second set of program modules comprising a navigation filter, an association checks module, and a tentative markers module; wherein the strapdown INS generates estimated kinematic state statistics for the vehicle relative to the landing zone frame, based on output data from an inertial measurement unit (IMU), and output data from the second processing unit.

Example 12 includes the method of Example 11, wherein the association checks module performs a process comprising: receiving corner position statistics for the vehicle computed by the computer vision algorithm; receiving corner position statistics for the vehicle computed by the machine learning algorithm; performing a first position statistics check for the corner position statistics computed by the computer vision algorithm based on predicted measurement vector statistics from the navigation filter; performing a second position statistics check for the corner position statistics computed by the machine learning algorithm based on the predicted measurement vector statistics from the navigation filter; performing a first ID check for a marker associated with a marker ID in the marker library based on the position statistics computed by the computer vision algorithm and a predicted ID; and performing a second ID check for the marker associated with the marker ID in the marker library based on the position statistics computed by the machine learning algorithm and the predicted ID.

Example 13 includes the method of Example 12, wherein the association checks module further performs a process comprising: determining whether results from the first position statistics check, and the first ID check, pass or fail; and determining whether results from the second position statistics check, and the second ID check, pass or fail.

Example 14 includes the method of any of Examples 12-13, wherein the predicted measurement vector statistics comprise: position, velocity, and angular orientation error statistics; IMU bias statistics; corner position error statistics; and the ID for the marker.

Example 15 includes the method of any of Examples 12-14, wherein the association checks module directs predicted state vector statistics, the predicted measurement vector statistics, measurement statistics from the computer vision module, and measurement statistics from the machine learning module to the navigation filter or the tentative markers module.

Example 16 includes the method of any of Examples 11-15, wherein the marker has three corner points or four corner points.

Example 17 includes the method of any of Examples 11-16, wherein: extracted marker corner positions from the computer vision algorithm are sent to a first touchdown and lift-off (TLOF) area check to confirm that three or four corner position statistics are within a TLOF area; and extracted marker corner positions from the machine learning algorithm are sent to a second TLOF area check, to confirm that three or four corner position statistics are within the TLOF area.

Example 18 includes the method of any of Examples 11-17, wherein the marker comprises one or more fiducials, structured patterns, or Aruco codes.

Example 19 includes the method of any of Examples 11-18, wherein the vehicle is an uncrewed aircraft systems (UAS) vehicle.

The present invention may be embodied in other specific forms without departing from its essential characteristics. The described embodiments are to be considered in all respects only as illustrative and not restrictive. The scope of the invention is therefore indicated by the appended claims rather than by the foregoing description. All changes that come within the meaning and range of equivalency of the claims are to be embraced within their scope.

## Claims

1. A system comprising:
at least one vision sensor mounted on a vehicle;
an inertial measurement unit (IMU) operative to produce inertial measurements for the vehicle;
a strapdown inertial navigation system (INS) on the vehicle and configured to receive the inertial measurements from the IMU;
at least one first processor on the vehicle and operatively coupled to the at least one vision sensor; and
at least one second processor on the vehicle and operatively coupled to the strapdown INS and the at least one first processor;
wherein the at least one first processor hosts a first set of program modules operative to extract landing marker information, the first set of program modules comprising a computer vision module and a machine learning module that are configured to operate in parallel such that each performs a method comprising:
receiving image data from the at least one vision sensor, the image data corresponding to at least one marker in a landing zone for the vehicle;
extracting corner points for the at least one marker;
resolving the corner points in a landing zone frame;
computing position statistics for the vehicle with respect to the corner points; and
associating the at least one marker with at least one marker identification (ID) in a **marker library for the landing zone;**
wherein the at least one second processor hosts a second set of program modules operative to provide filter and association functions, the second set of program modules comprising a navigation filter, an association checks module, and a tentative markers module;
wherein the strapdown INS is operative to generate estimated kinematic state statistics for the vehicle relative to the landing zone frame, based on output data from the IMU, and output data from the filter and association functions of the at least one second processor.

2. The system of claim 1, wherein the association checks module is operative to:
receive corner position statistics for markers computed by the computer vision module;
receive corner position statistics for the markers computed by the machine learning module;
perform a first position statistics check for the corner position statistics computed by the computer vision module based on predicted measurement vector statistics from the navigation filter;
perform a second position statistics check for the corner position statistics computed by the machine learning module based on the predicted measurement vector statistics from the navigation filter;
perform a first ID check for a marker associated with a marker ID in the **marker library identified** by the computer vision module and a predicted ID; and
perform a second ID check for the marker associated with the marker ID in the **marker library** identified by the machine learning module and the predicted ID.

3. The system of claim 2, wherein the association checks module is further operative to:
determine whether results from the first position statistics check, and the first ID check, pass or fail; and
determine whether results from the second position statistics check, and the second ID check, pass or fail.

4. The system of claim 2, wherein the association checks module is further operative to direct predicted state vector statistics, the predicted measurement vector statistics, measurement statistics from the computer vision module, and measurement statistics from the machine learning module to the navigation filter or the tentative markers module.

5. The system of claim 2, wherein the strapdown INS is operative to generate the estimated kinematic state statistics for the vehicle relative to the landing zone frame, based on the inertial measurements from the IMU, which is combined with output data from the navigation filter using a subtractor.

6. The system of claim 1, wherein the at least one marker has three corner points or four corner points.

7. The system of claim 1, wherein the vehicle is an uncrewed aircraft systems (UAS) vehicle.

8. A method comprising:
providing a first processing unit in a vehicle having a vision sensor mounted thereon, the first processing unit hosting a first set of program modules comprising a computer vision algorithm and a machine learning algorithm that operate in parallel such that each performs a process comprising:
receiving image data from the vision sensor, the image data corresponding to a marker in a landing zone for the vehicle;
extracting corner points for the marker in the landing zone;
resolving the extracted corner points in a landing zone frame;
computing position statistics for the vehicle with respect to the corner points; and
associating the marker in the landing zone with a marker identification (ID) in a **marker library for the landing zone; and**
providing a second processing unit in the vehicle, the second processing unit in communication with an onboard strapdown inertial navigation system (INS) and the first processing unit, the second processing unit hosting a second set of program modules comprising a navigation filter, an association checks module, and a tentative markers module;
wherein the strapdown INS generates estimated kinematic state statistics for the vehicle relative to the landing zone frame, based on output data from an inertial measurement unit (IMU), and output data from the second processing unit.

9. The method of claim 8, wherein the association checks module performs a process comprising:
receiving corner position statistics for the marker computed by the computer vision algorithm;
receiving corner position statistics for the marker computed by the machine learning algorithm;
performing a first position statistics check for the corner position statistics computed by the computer vision algorithm based on predicted measurement vector statistics from the navigation filter;
performing a second position statistics check for the corner position statistics computed by the machine learning algorithm based on the predicted measurement vector statistics from the navigation filter;
performing a first ID check for a marker associated with a marker ID in the **marker library based on** the position statistics computed by the computer vision algorithm and a predicted ID; and
performing a second ID check for the marker associated with the marker ID in the **marker library** based on the position statistics computed by the machine learning algorithm and the predicted ID.

10. The method of claim 8, wherein:
extracted marker corner positions from the computer vision algorithm are sent to a first touchdown and lift-off (TLOF) area check to confirm that three or four corner position statistics are within a TLOF area; and
extracted marker corner positions from the machine learning algorithm are sent to a second TLOF area check, to confirm that three or four corner position statistics are within the TLOF area.
